(19) Europäisches Patentamt
European Patent Office
Office européen des brevets

(11) EP 3 297 403 A1

(12) EUROPÄISCHE PATENTANMELDUNG

(43) Veröffentlichungstag:
21.03.2018 Patentblatt 2018/12

(51) Int Cl.:
H05B 7/18 (2006.01)        H05B 7/00 (2006.01)
H05B 7/144 (2006.01)

(21) Anmeldenummer: 16188941.5

(22) Anmeldetag: 15.09.2016

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
MA MD

(71) Anmelder: Primetals Technologies Germany
GmbH
91052 Erlangen (DE)

(72) Erfinder:
• Dittmer, Björn
90461 Nürnberg (DE)
• Hergt, Martin
90411 Nürnberg (DE)
• Rieger, Detlef
85598 Baldham (DE)

(74) Vertreter: Metals@Linz
Primetals Technologies Austria GmbH
Intellectual Property Upstream IP UP
Turmstraße 44
4031 Linz (AT)

(54) **UMRICHTERGESPEISTER LICHTBOGENOFEN MIT KONDENSATORANORDNUNG IM SEKUNDÄRKREIS**

(57) Eine Elektroanordnung für einen mit Wechselstrom betriebenen Lichtbogenofen (1) weist einen Umrichter (2) auf, der eine eine Netzfrequenz (f) aufweisende Netzspannung (U) eines Versorgungsnetzes (3) in eine eine Ofenfrequenz (f') aufweisende Primärspannung (U') umsetzt. Ein Ofentransformator (4) der Elektroanordnung transformiert die Primärspannung (U') in eine Sekundärspannung (U"). Die Sekundärspannung (U") wird einer Anzahl von Elektroden (6) des Lichtbogenofens (1) zugeführt. Die Elektroden (6) sind in einem Ofengefäß (8) des Lichtbogenofens (1) angeordnet. Sie beaufschlagen ein im Ofengefäß (8) befindliches Schmelzgut (9) mit Lichtbögen (10). Die Sekundärspannung (U") wird weiterhin einer ausgangsseitig des Ofentransformators (4) angeordneten Kondensatoranordnung (7) zugeführt, mit der der Ofentransformator (4) ausgangsseitig verbunden ist.

FIG 1

EP 3 297 403 A1

**Beschreibung**

Die vorliegende Erfindung geht aus von einer Elektroanordnung für einen mit Wechselstrom betriebenen Lichtbogenofen,

- wobei die Elektroanordnung einen Umrichter, einen Ofentransformator, eine Anzahl von Elektroden und eine Kondensatoranordnung aufweist,
- wobei die Elektroden in einem Ofengefäß des Lichtbogenofens angeordnet sind, so dass sie ein im Ofengefäß befindliches Schmelzgut mit Lichtbögen beaufschlagen,
- wobei der Umrichter eingangsseitig mit einem eine Netzfrequenz und eine Netzspannung aufweisenden Versorgungsnetz und ausgangsseitig mit dem Ofentransformator verbunden ist,
- wobei der Ofentransformator eingangsseitig mit dem Umrichter und ausgangsseitig mit den Elektroden des Lichtbogenofens verbunden ist.

Die vorliegende Erfindung geht weiterhin aus von einem Betriebsverfahren für einen mit Wechselstrom betriebenen Lichtbogenofen,

- wobei ein Umrichter eine eine Netzfrequenz aufweisende Netzspannung eines Versorgungsnetzes in eine eine Ofenfrequenz aufweisende Primärspannung umsetzt,
- wobei die Primärspannung einem Ofentransformator zugeführt wird, der die Primärspannung in eine Sekundärspannung transformiert,
- wobei die Sekundärspannung einer Anzahl von in einem Ofengefäß des Lichtbogenofens angeordneten Elektroden des Lichtbogenofens zugeführt wird, so dass die Elektroden ein in dem Ofengefäß befindliches Schmelzgut mit Lichtbögen beaufschlagen.

Eine derartige Elektroanordnung und das zugehörige Betriebsverfahren sind beispielsweise aus der DE 10 2008 049 610 A1 bzw. der korrespondierenden US 8 933 378 B2 bekannt. Bei der bekannten Elektroanordnung sind sekundärseitig des Ofentransformators ausschließlich die Elektroden angeordnet. Etwaige Blindleistungskompensatoren und/oder Kondensatoranordnungen sind entweder zwischen dem Versorgungsnetz und dem Umrichter oder zwischen dem Umrichter und dem Ofentransformator angeordnet.

Auch aus der WO 97/49157 A1 ist eine Elektroanordnung für einen Lichtbogenofen bekannt. Bei dieser Anordnung ist eine Kondensatoranordnung vorhanden, die - ebenso wie ein gesteuerter Blindleistungskompensator und mehrere Reihenschaltungen einer Kapazität und einer Induktivität - dem Lichtbogenofen parallel geschaltet ist. Die genannten, parallel geschalteten Komponenten sind über einen Transformator an ein Versorgungsnetz angeschlossen. Die Kapazität und die Reihenschaltungen von je einer Kapazität und einer Induktivität stellen Filterkreise dar, die auf ein ganzzahliges oder nicht ganzzahliges Vielfaches der Netzfrequenz abgestimmt sind. Über den internen Aufbau des Lichtbogenofens ist der WO 97/49157 A1 nichts zu entnehmen. Insbesondere ist der WO 97/49157 A1 nicht zu entnehmen, ob es sich bei dem Transformator der WO 7 90/49157 A1 um den Ofentransformator handelt.

Lichtbogenöfen - insbesondere Drehstrom-Lichtbogenöfen - werden zum Schmelzen von festem Einsatzmaterial (= Schmelzgut) genutzt. Hierzu wird über eine Anzahl von Graphitelektroden elektrische Energie in Form von Lichtbögen in das Ofengefäß eingebracht. Die Anzahl an Graphitelektroden korrespondiert mit der speisenden Spannung. Bei einem üblichen dreiphasigen Drehstrom-Lichtbogenofen sind somit drei Elektroden vorhanden, bei einem mit Gleichstrom gespeisten Lichtbogenofen eine einzige Elektrode. Zur Versorgung der Elektroden mit elektrischer Energie wird mit Hilfe eines Ofentransformators die Mittel- oder Hochspannung des Versorgungsnetzes (meist zwischen 10 und 40 kV, in einzelnen Fällen auch bis 100 oder 110 kV) bei Netzfrequenz (50 oder 60 Hz) in eine Niederspannung (meist mehrere 100 V, in einzelnen Fällen etwas über 1 kV, maximal 2 kV) heruntertransformiert und den Elektroden zugeführt. Die Elektroden werden nach Bedarf mechanisch nach oben und unten verfahren, um den Lichtbogen zu zünden und sodann über den Abstand zwischen Elektrode und Einsatzmaterial bzw. Schmelzgut die Lichtbogenspannung, den Strom und damit im Ergebnis die eingekoppelte Leistung einzustellen.

Die Konstruktion der stromführenden Elemente des Lichtbogenofens erfolgt unter anderem unter Berücksichtigung der auftretenden Selbst- und Gegeninduktivitäten des Hochstromsystems auf der Sekundärseite des Ofentransformators bis hin zu den Graphitelektroden. In der Regel wird versucht, eine Kurzschlussreaktanz dieser Bauteile bei Netzfrequenz im Bereich von ca. 3 Milliohm zu erreichen. In diesem Bereich sind zum einen die maximal möglichen Ströme bei betriebsmäßigem Kurzschluss im Ofengefäß begrenzt. Zum anderen wird die in dem elektromagnetischen Feld gespeicherte Energie der Induktivitäten bei einem Lichtbogenabriss in Form einer Spannungserhöhung zur Verfügung gestellt. Dies begünstigt das Wiederzünden des Lichtbogens. Beide Effekte sind vorteilhaft für die Prozessführung des Lichtbogenofens. Insbesondere begünstigen sie die elektrische Energieeinbringung.

Durch die oben beschriebenen Reaktanzen ist die Leistungsaufnahme des Lichtbogenofens durch einen hohen Blindleistungsanteil gekennzeichnet. Typische Werte für den Leistungsfaktor des Ofenzweiges liegen im Bereich von ca. 0,8. Bei einem Transformator mit einer Scheinleistung von 100 MVA und einem Wirkleistungseintrag von 83 MW ergibt sich dadurch eine Blindleistung im Bereich von rund 56 MVAr. Dadurch entstehen höhere Verluste bei der elektrischen Energieübertragung. Weiterhin muss eine entsprechend höhere Stromtragfähigkeit der elektrischen Betriebsmittel eingeplant werden. Darüber hinaus entstehen in nachteiliger Weise oftmals Netzrückwirkungen im speisenden Versorgungsnetz, insbesondere Flicker. Auch bestehen oftmals Restriktionen bezüglich des minimal zulässigen Leistungsfaktors seitens der Energieversorgung, so dass zur Einhaltung des Leistungsfaktors eine Blindleistungskompensation erforderlich ist.

Üblicherweise erfolgt der Betrieb des Lichtbogenofens mit einer hinreichend großen Induktivität im Stromkreis. Dies bewirkt, dass der Strom weit genug nacheilt. Dadurch ist im Stromnulldurchgang die Spannung bereits groß genug, um den Stromfluss aufrecht zu erhalten. Dies führt jedoch im Gegenzug dazu, dass der Lichtbogenofen nur bis zu einem bestimmten Leistungsfaktor betrieben werden kann. Es ergibt sich somit eine hohe Blindleistung. Die elektrischen Betriebsmittel können daher nicht optimal genutzt werden.

Die Vorgehensweise gemäß der DE 10 2008 049 610 A1 stellt gegenüber dieser Vorgehensweise bereits einen Fortschritt dar. Insbesondere kann der Lichtbogenofen mit einer Frequenz betrieben werden, die unabhängig von der Netzfrequenz des Versorgungsnetzes gewählt wird. Auch die Vorgehensweise gemäß der DE 10 2008 049 610 A1 ist jedoch noch verbesserungsfähig.

Die Aufgabe der vorliegenden Erfindung besteht darin, Möglichkeiten zu schaffen, mittels derer zum einen der Betrieb des Lichtbogenofens optimiert werden kann, insbesondere die Stabilität der Lichtbögen maximiert werden kann. Zum anderen sollen die Kosten für die zum Betrieb des Lichtbogenofens erforderlichen Komponenten minimiert werden.

Die Aufgabe wird durch eine Elektroanordnung mit den Merkmalen des Anspruchs 1 gelöst. Vorteilhafte Ausgestaltungen der Elektroanordnung sind Gegenstand der abhängigen Ansprüche 2 bis 4.

Erfindungsgemäß wird eine Elektroanordnung der eingangs genannten Art dadurch ausgestaltet, dass der Ofentransformator ausgangsseitig nicht nur mit den Elektroden des Lichtbogenofens, sondern auch mit der Kondensatoranordnung verbunden ist. Es wird also die Kondensatoranordnung im Gegensatz zur allgemein üblichen Vorgehensweise des Standes der Technik nicht primärseitig des Ofentransformators oder sogar noch weiter zum Versorgungsnetz hin angeordnet, sondern sekundärseitig des Ofentransformators.

Durch diese Ausgestaltung wird zum einen erreicht, dass weder zwischen dem Versorgungsnetz und dem Umrichter noch zwischen dem Umrichter und dem Ofentransformator noch ausgangsseitig des Ofentransformators ein gesteuerter Blindleistungskompensator vorhanden sein muss. Es ist also keine weitergehende Blindleistungskompensation erforderlich. Vielmehr ist es möglich, die Speisung durch den Umrichter derart einzustellen, dass der aus den Elektroden des Lichtbogenofens einerseits und der Kondensatoranordnung andererseits gebildete elektrische Schwingkreis zur Resonanz angeregt wird.

Die Ofenfrequenz kann insbesondere so hoch gewählt werden, dass sie weit oberhalb der Netzfrequenz von üblicherweise 50 oder 60 Hz liegt. Aus diesem Grund ist vorzugsweise der Ofentransformator als Mittelfrequenztransformator ausgebildet.

Die Kondensatoranordnung kann nach Bedarf ausgebildet sein. Insbesondere können Kondensatoren der Kondensatoranordnung parallel und/oder in Serie zu den Elektroden des Lichtbogenofens geschaltet sein.

Die Aufgabe wird weiterhin durch ein Betriebsverfahren mit den Merkmalen des Anspruchs 5 gelöst. Vorteilhafte Ausgestaltungen des Betriebsverfahrens sind Gegenstand der abhängigen Ansprüche 6 bis 10.

Erfindungsgemäß wird die Sekundärspannung nicht nur den Elektroden, sondern weiterhin auch einer ausgangsseitig des Ofentransformators angeordneten Kondensatoranordnung zugeführt.

Analog zu der Elektroanordnung wird dadurch ermöglicht, dass weder zwischen dem Versorgungsnetz und dem Umrichter noch zwischen dem Umrichter und dem Ofentransformator noch ausgangsseitig des Ofentransformators eine gesteuerte Blindleistungskompensation erfolgt.

Die Ofenfrequenz kann erheblich größer als die Netzfrequenz sein. Insbesondere kann die Ofenfrequenz um mindestens eine Größenordnung, d.h. einen Faktor 10, größer als die Netzfrequenz sein. Vorzugsweise ist die Ofenfrequenz sogar größer als 1 kHz, insbesondere größer als 3 kHz. Beispielsweise kann die Ofenfrequenz zwischen 5 und 15 kHz liegen. Die Ofenfrequenz kann aber auch noch höhere Werte von beispielsweise bis zu 20 kHz, bis zu 30 kHz, bis zu 50 kHz und in seltenen Fällen auch noch höhere Werte von bis zu 100 kHz aufweisen. Die Ofenfrequenz ist hierbei die Grundfrequenz, mit welcher die Elektroden gespeist werden. Die Ofenfrequenz ist also nicht eine Oberschwingung.

Die Ofenfrequenz kann insbesondere derart gewählt werden, dass sie im Resonanzbereich eines durch die Induktivitäten der Elektroden des Lichtbogenofens und die Kondensatoranordnung gebildeten elektrischen Schwingkreises liegt.

Kondensatoren der Kondensatoranordnung können, wie bereits erwähnt, nach Bedarf parallel und/oder in Serie zu den Elektroden des Lichtbogenofens geschaltet sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:

FIG 1    eine Elektroanordnung und einen Lichtbogenofen,
FIG 2    ein Frequenzdiagramm,
FIG 3    eine mögliche Kondensatoranordnung und
FIG 4    eine weitere mögliche Kondensatoranordnung.

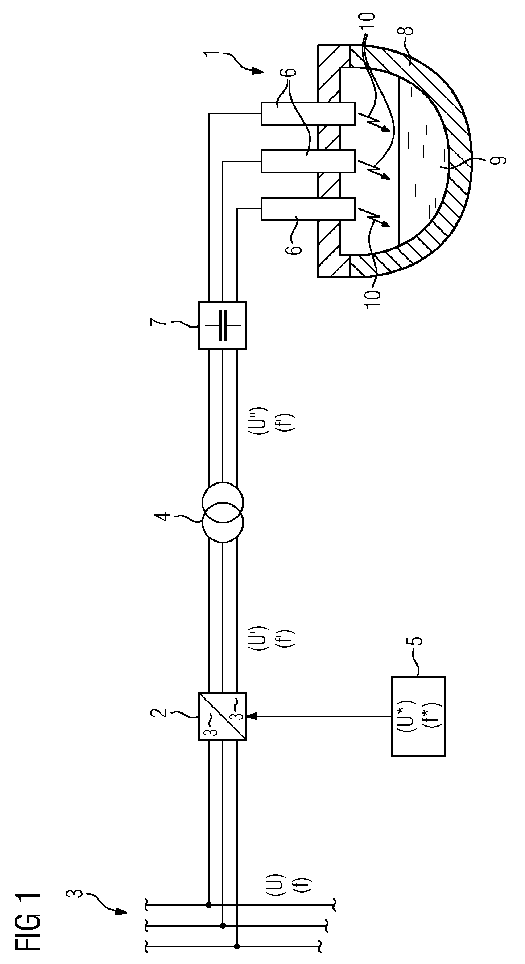

Gemäß FIG 1 weist eine Elektroanordnung für einen Lichtbogenofen 1 einen Umrichter 2 auf. Der Umrichter 2 ist eingangsseitig mit einem Versorgungsnetz 3 und ausgangsseitig mit einem Ofentransformator 4 verbunden. Der Umrichter 2 setzt eine Netzspannung U des Versorgungsnetzes 3 in eine Primärspannung U' um.
Das Versorgungsnetz 3 ist in der Regel ein Drehstromnetz. Die Netzspannung U ist in der Regel größer als 10 kV. Beispielsweise kann sie bei 30 oder 33 kV liegen. Der Umrichter 2 kann beispielsweise als Zwischenkreisumrichter ausgebildet sein. Eine mögliche Ausgestaltung des Umrichters 2 kann insbesondere auf die gleiche Art und Weise erfolgen, wie es in der DE 10 2008 049 610 A1 erläutert ist. Es sind jedoch auch andere Ausgestaltungen des Umrichters 2 möglich.
Die Netzspannung U weist eine Netzfrequenz f von üblicherweise 50 oder 60 Hz auf. Die Primärspannung U' ist kleiner als die Netzspannung U. Oftmals ist die Primärspannung U' jedoch nur geringfügig kleiner als die Netzspannung U. Beispielsweise kann sie im Bereich zwischen 70 % und 100 % der Netzspannung U liegen. Die Primärspannung U' weist jedoch eine Ofenfrequenz f' auf, die unabhängig von der Netzfrequenz f gewählt werden kann. Insbesondere kann die Ofenfrequenz f' erheblich größer als die Netzfrequenz f sein, beispielsweise mindestens zehnmal so groß. Die Ofenfrequenz f' kann sogar größer als 1 kHz sein, insbesondere größer als 3 kHz. Bevorzugte Bereiche der Ofenfrequenz f' liegen zwischen 5 und 15 kHz. Es sind jedoch auch größere Frequenzen bis zu 100 kHz möglich. Sowohl für die Primärspannung U' als auch für die Ofenfrequenz f' können von einer Steuereinrichtung 5 für den Lichtbogenofen 1 entsprechende Sollwerte U*, f* ermittelt werden und basierend auf den ermittelten Sollwerten U*, f* eine entsprechende Ansteuerung des Umrichters 2 vorgenommen werden. Es ist somit möglich, die Primärspannung U' als Regelgröße für den Lichtbogenofen 1 zu verwenden.
Aufgrund der hohen Ofenfrequenz f' ist der Ofentransformator 4 vorzugsweise als Mittelfrequenztransformator ausgebildet.
Die Primärspannung U' wird eingangsseitig dem Ofentransformator 4 zugeführt. Der Ofentransformator 4 transformiert die Primärspannung U' in eine Sekundärspannung U". Die Sekundärspannung U" ist kleiner als die Primärspannung U'. Meist liegt die Sekundärspannung U" im Bereich von mehreren 100 V, manchmal geringfügig darüber. In Einzelfällen sind Werte bis etwas über 1 kV, maximal jedoch 2 kV möglich. Unabhängig vom konkreten Wert der Sekundärspannung U" weist jedoch auch die Sekundärspannung U" die Ofenfrequenz f' auf.
Ausgangsseitig ist der Ofentransformator 4 mit einer Anzahl von Elektroden 6 des Lichtbogenofens 1 und einer Kondensatoranordnung 7 verbunden. In dem seltenen Fall eines Wechselstrom-Lichtbogenofens sind entweder zwei Elektroden 6 oder eine einzige Elektrode 6 und eine Bodenanode vorhanden. In dem üblichen Fall eines Drehstrom-Lichtbogenofens liegt die Anzahl bei mindestens drei, in der Regel bei exakt drei. Unabhängig von der Anzahl an Elektroden 6 wird der Lichtbogenofen 1 jedoch mit Wechselstrom betrieben. Die Elektroden 6 sind in einem Ofengefäß 8 des Lichtbogenofens 1 angeordnet. Die Elektroden 6 beaufschlagen ein im Ofengefäß 8 befindliches Schmelzgut 9 mit Lichtbögen 10. Die Sekundärspannung U" wird sowohl den Elektroden 6 als auch der Kondensatoranordnung 7 zugeführt.
Zusätzlich zu der Kondensatoranordnung 7 ist keine weitere Blindleistungskompensation erforderlich. Es ist somit vorzugsweise weder zwischen dem Versorgungsnetz 3 und dem Umrichter 2 noch zwischen dem Umrichter 2 und dem Ofentransformator 4 noch ausgangsseitig des Ofentransformators 4 ein gesteuerter Blindleistungskompensator vorhanden. Dies gilt insbesondere für einen TCR (= thyristor controlled reactor) . Oftmals ist auch kein ungesteuerter Filterkreis vorhanden. Wenn dennoch ein ungesteuerter Filterkreis vorhanden sein sollte, ist dieser vorzugsweise vor dem Umrichter 2 angeordnet und auf eine Oberschwingung der Netzfrequenz f ausgelegt.
Die Elektroden 6 des Lichtbogenofens 1 und die Kondensatoranordnung 7 bilden aufgrund der Induktivitäten L der Elektroden 6 und der Kapazität C der Kondensatoranordnung 7 einen elektrischen Schwingkreis. Der elektrische Schwingkreis weist eine Resonanzfrequenz fR auf, die durch die Beziehung

$$fR = \frac{1}{2\pi\sqrt{LC}} \tag{1}$$

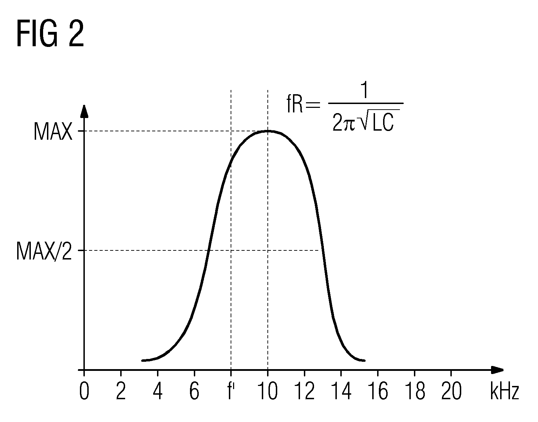

gegeben ist. Die Ofenfrequenz f' ist, wie bereits erwähnt, erheblich größer als die Netzfrequenz f. Entsprechend der Darstellung in FIG 2 kann die Ofenfrequenz f' im Resonanzbereich des elektrischen Schwingkreises liegen. Insbesondere kann die Beziehung

$$\alpha \leq f'/fR < \beta \qquad\qquad (2)$$

gelten. $\alpha$ ist ein Wert von mindestens 0,3. Meist liegt $\alpha$ im Bereich zwischen 0,5 und 0,9. Insbesondere kann $\alpha$ bei etwa 0,7 liegen. $\beta$ ist ein Wert von maximal 3,3. Meist liegt $\beta$ zwischen 1,1 und 2,0. Insbesondere kann $\beta$ bei etwa 1,4 liegen. Weiterhin kann $\beta$ (zumindest auf ca. 10 % genau) der Kehrwert von $\alpha$ sein.

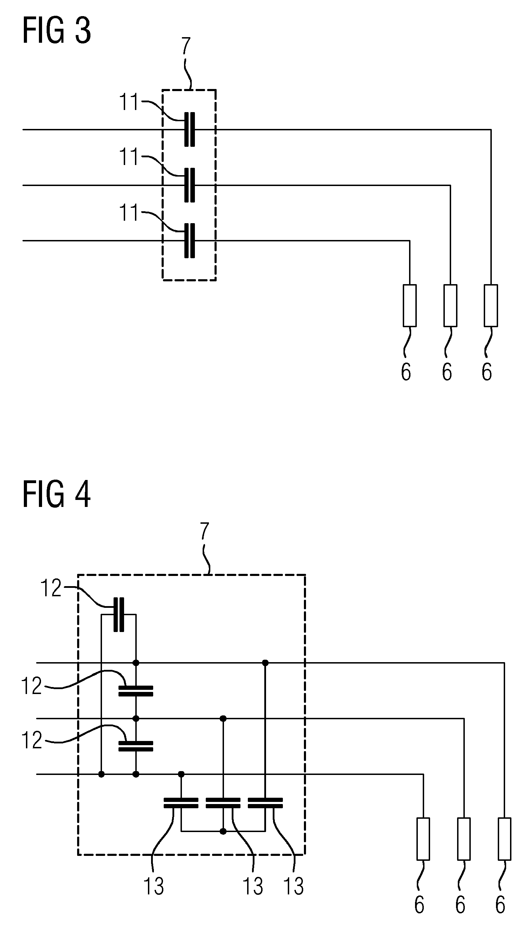

Die genaue Ausgestaltung der Kondensatoranordnung 7 kann nach Bedarf sein. Beispielsweise kann die Kondensatoranordnung 7 entsprechend der Darstellung in FIG 3 Kondensatoren 11 aufweisen, welche in den Leitungen zu den Elektroden 6 selbst angeordnet sind, also in Serie zu den Elektroden 6 des Lichtbogenofens 1 geschaltet sind. Alternativ kann die Kondensatoranordnung 7 entsprechend der Darstellung in FIG 4 Kondensatoren 12, 13 aufweisen, mittels derer die Leitungen zu den Elektroden 6 miteinander und/oder mit einem gemeinsamen Sternpunkt verbunden sind. Der Sternpunkt kann, nicht aber muss, geerdet sein. In diesem Fall sind die Kondensatoren 12, 13 parallel zu den Elektroden 6 des Lichtbogenofens 1 geschaltet. Auch Kombinationen derartiger Anordnungen sind möglich.

Zusammengefasst betrifft die vorliegende Erfindung somit folgenden Sachverhalt:

Eine Elektroanordnung für einen mit Wechselstrom betriebenen Lichtbogenofen 1 weist einen Umrichter 2 auf, der eine eine Netzfrequenz f aufweisende Netzspannung U eines Versorgungsnetzes 3 in eine eine Ofenfrequenz f' aufweisende Primärspannung U' umsetzt. Ein Ofentransformator 4 der Elektroanordnung transformiert die Primärspannung U' in eine Sekundärspannung U".

Die Sekundärspannung U" wird einer Anzahl von Elektroden 6 des Lichtbogenofens 1 zugeführt. Die Elektroden 6 sind in einem Ofengefäß 8 des Lichtbogenofens 1 angeordnet. Sie beaufschlagen ein im Ofengefäß 8 befindliches Schmelzgut 9 mit Lichtbögen 10. Die Sekundärspannung U" wird weiterhin einer ausgangsseitig des Ofentransformators 4 angeordneten Kondensatoranordnung 7 zugeführt, mit der der Ofentransformator 4 ausgangsseitig verbunden ist.

Die vorliegende Erfindung weist viele Vorteile auf. Insbesondere kann aufgrund der hohen Ofenfrequenz f' die Stabilität des Lichtbogens über einen erweiterten Arbeitsbereich sichergestellt werden. Auch die Wahrscheinlichkeit von internen Überschlägen aufgrund von unkontrollierten Überspannungen wird minimiert. Weiterhin können die eingesetzten elektrischen Komponenten sowohl bezüglich ihrer Baugröße als auch bezüglich ihrer elektrischen Nominalwerte (Kapazität und Induktivität) kleiner dimensioniert werden. Die sekundärseitig des Ofentransformators 4 angeordnete Kondensatoranordnung 7 ermöglicht es, den Leistungsfaktor auf Werte von 0, 95 und mehr, im Idealfall von 0,98 und mehr, einzustellen. Die hohe Ofenfrequenz f' ermöglicht weiterhin, den Sollwert U* für die Primärspannung U' sehr schnell - im Millisekundenbereich - nachzuführen und die Primärspannung U' in diesem Zeitbereich nachzuregeln. Ein Stufenschalter an der Primärseite des Ofentransformators 4 ist dadurch nicht mehr erforderlich. Die Primärspannung U' kann weiterhin variiert werden. Flicker wird reduziert. Auch die Baugröße des Ofentransformators 4 kann reduziert werden. Der Energieverbrauch kann reduziert werden. Auch Wartungskosten sind reduziert.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Bezugszeichenliste

| 1 | Lichtbogenofen |
|---|---|
| 2 | Umrichter |
| 3 | Versorgungsnetz |
| 4 | Ofentransformator |
| 5 | Steuereinrichtung |
| 6 | Elektroden |
| 7 | Kondensatoranordnung |
| 8 | Ofengefäß |
| 9 | Schmelzgut |
| 10 | Lichtbögen |
| 11 bis 13 | Kondensatoren |

C    Kapazität
f    Netzfrequenz
f'    Ofenfrequenz
fR    Resonanzfrequenz
f*    Sollwert für Ofenfrequenz
L    Induktivität
U    Netzspannung
U'    Primärspannung
U"    Sekundärspannung
U*    Sollwert für Primärspannung

$\alpha, \beta$    Werte

**Patentansprüche**

1. Elektroanordnung für einen mit Wechselstrom betriebenen Lichtbogenofen (1),

   - wobei die Elektroanordnung einen Umrichter (2), einen Ofentransformator (4), eine Anzahl von Elektroden (6) und eine Kondensatoranordnung (7) aufweist,
   - wobei die Elektroden (6) in einem Ofengefäß (8) des Lichtbogenofens (1) angeordnet sind, so dass sie ein im Ofengefäß (8) befindliches Schmelzgut (9) mit Lichtbögen (10) beaufschlagen,
   - wobei der Umrichter (2) eingangsseitig mit einem eine Netzfrequenz (f) und eine Netzspannung (U) aufweisenden Versorgungsnetz (3) und ausgangsseitig mit dem Ofentransformator (4) verbunden ist,
   - wobei der Ofentransformator (4) eingangsseitig mit dem Umrichter (2) und ausgangsseitig mit den Elektroden (6) des Lichtbogenofens (1) und der Kondensatoranordnung (7) verbunden ist.

2. Elektroanordnung nach Anspruch 1,
   **dadurch gekennzeichnet,**
   **dass** weder zwischen dem Versorgungsnetz (3) und dem Umrichter (2) noch zwischen dem Umrichter (2) und dem Ofentransformator (4) noch ausgangsseitig des Ofentransformators (4) ein gesteuerter Blindleistungskompensator vorhanden ist.

3. Elektroanordnung nach Anspruch 1 oder 2,
   **dadurch gekennzeichnet,**
   **dass** der Ofentransformator (4) als Mittelfrequenztransformator ausgebildet ist.

4. Elektroanordnung nach Anspruch 1, 2 oder 3, **dadurch gekennzeichnet,**
   **dass** die Kondensatoranordnung (7) Kondensatoren (11 bis 13) aufweist, die parallel und/oder in Serie zu den Elektroden (6) des Lichtbogenofens (1) geschaltet ist.

5. Betriebsverfahren für einen mit Wechselstrom betriebenen Lichtbogenofen (1),

   - wobei ein Umrichter (2) eine eine Netzfrequenz (f) aufweisende Netzspannung (U) eines Versorgungsnetzes (3) in eine eine Ofenfrequenz (f') aufweisende Primärspannung (U') umsetzt,
   - wobei die Primärspannung (U') einem Ofentransformator (4) zugeführt wird, der die Primärspannung (U') in eine Sekundärspannung (U") transformiert,
   - wobei die Sekundärspannung (U") einer Anzahl von in einem Ofengefäß (8) des Lichtbogenofens (1) angeordneten Elektroden (6) des Lichtbogenofens (1) zugeführt wird, so dass die Elektroden (6) ein in dem Ofengefäß (8) befindliches Schmelzgut (9) mit Lichtbögen (10) beaufschlagen,
   - wobei die Sekundärspannung (U") weiterhin einer ausgangsseitig des Ofentransformators (4) angeordneten Kondensatoranordnung (7) zugeführt wird.

6. Betriebsverfahren nach Anspruch 5,
   **dadurch gekennzeichnet,**
   **dass** weder zwischen dem Versorgungsnetz (3) und dem Umrichter (2) noch zwischen dem Umrichter (2) und dem Ofentransformator (4) noch ausgangsseitig des Ofentransformators (4) eine gesteuerte Blindleistungskompensation erfolgt.

**7.** Betriebsverfahren nach Anspruch 5 oder 6,
**dadurch gekennzeichnet,**
**dass** die Ofenfrequenz (f') erheblich größer als die Netzfrequenz (f) ist.

**8.** Betriebsverfahren nach Anspruch 7,
**dadurch gekennzeichnet,**
**dass** die Ofenfrequenz (f') größer als 1 kHz ist, insbesondere größer als 3 kHz.

**9.** Betriebsverfahren nach einem der Ansprüche 5 bis 8, **dadurch gekennzeichnet,**
**dass** die Ofenfrequenz (f') im Resonanzbereich eines durch die Induktivitäten (L) der Elektroden (6) des Lichtbogenofens (1) und die Kondensatoranordnung (7) gebildeten elektrischen Schwingkreises liegt.

**10.** Betriebsverfahren nach einem der Ansprüche 5 bis 9, **dadurch gekennzeichnet,**
**dass** die Kondensatoranordnung (7) Kondensatoren (11 bis 13) aufweist, die parallel und/oder in Serie zu den Elektroden (6) des Lichtbogenofens (1) geschaltet ist.

## FIG 1

EP 3 297 403 A1

## FIG 3

Europäisches
Patentamt

European
Patent Office

Office européen
des brevets

**EUROPÄISCHER RECHERCHENBERICHT**

Nummer der Anmeldung

EP 16 18 8941

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 30 25 466 A1 (ERO STARKSTROM KONDENSATOREN [DE]) 4. Februar 1982 (1982-02-04) * Zusammenfassung * * Seite 5 - Seite 7 * * Abbildungen 3A,B * ----- | 1-10 | INV. H05B7/18 H05B7/00 H05B7/144 |
| X | DE 949 425 C (AEG) 20. September 1956 (1956-09-20) * Zusammenfassung * * Absatz [0004] - Absatz [0007] * * Absatz [0011] - Absatz [0012] * * Absatz [0014] - Absatz [0015] * * Abbildungen 1,2 * ----- | 1-10 | |
| X | US 6 687 284 B1 (BEAUREGARD FRANCOIS [CA] ET AL) 3. Februar 2004 (2004-02-03) * Zusammenfassung * * Spalte 4, Zeile 54 - Spalte 5, Zeile 29 * * Spalte 6, Zeile 48 - Spalte 7, Zeile 2 * * Spalte 8, Zeile 1 - Zeile 38 * * Spalte 8, Zeile 63 - Spalte 10, Zeile 29 * * Spalte 17, Zeile 1 - Zeile 25 * * Abbildungen 1-14 * ----- | 1-10 | |
| X | US 3 408 447 A (FERDINAND BECK) 29. Oktober 1968 (1968-10-29) * Zusammenfassung * * Spalte 1, Zeile 30 - Zeile 32 * * Spalte 2, Zeile 66 - Spalte 3, Zeile 23 * * Spalte 3, Zeile 71 - Spalte 4, Zeile 4 * * Abbildung 1 * ----- -/-- | 1-10 | |

RECHERCHIERTE
SACHGEBIETE (IPC)

H05B

Der vorliegende Recherchenbericht wurde für alle Patentansprüche erstellt

| Recherchenort | Abschlußdatum der Recherche | Prüfer |
|---|---|---|
| München | 18. Januar 2017 | Chelbosu, Liviu |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

    .......................................................................................
& : Mitglied der gleichen Patentfamilie, übereinstimmendes Dokument

EPO FORM 1503 03.82 (P04C03)

Europäisches
Patentamt

European
Patent Office

Office européen
des brevets

## EUROPÄISCHER RECHERCHENBERICHT

Nummer der Anmeldung

EP 16 18 8941

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 867 267 C (DEMAG ELEKTROMETALLURGIE GMBH) 16. Februar 1953 (1953-02-16) <br> * Zusammenfassung * <br> * Absatz [0002] - Absatz [0003] * <br> * Absatz [0007] * <br> * Abbildungen 1,2 * <br> ----- | 1-10 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 18. Januar 2017 | Chelbosu, Liviu |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 16 18 8941

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-01-2017

| Im Recherchenbericht angeführtes Patentdokument | Datum der Veröffentlichung | Mitglied(er) der Patentfamilie | Datum der Veröffentlichung |
|---|---|---|---|
| DE 3025466 A1 | 04-02-1982 | KEINE | |
| DE 949425 C | 20-09-1956 | KEINE | |
| US 6687284 B1 | 03-02-2004 | KEINE | |
| US 3408447 A | 29-10-1968 | AT 260561 B | 11-03-1968 |
| | | BE 665724 A | 18-10-1965 |
| | | CH 427071 A | 31-12-1966 |
| | | DE 1565201 A1 | 05-02-1970 |
| | | FR 1457473 A | 04-11-1966 |
| | | GB 1105290 A | 06-03-1968 |
| | | SE 313130 B | 04-08-1969 |
| | | US 3408447 A | 29-10-1968 |
| DE 867267 C | 16-02-1953 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008049610 A1
- US 8933378 B2
- WO 9749157 A1
- WO 79049157 A1